# EUROPEAN PATENT SPECIFICATION

(11) **EP 1 880 889 B1**
(45) Date of publication and mention of the grant of the patent: **03.02.2010**
(21) Application number: 07112794.8
(22) Date of filing: 19.07.2007
(51) Int. Cl.: B60J 7/22

(54) **Windbreak device for motor vehicle with an opening roof**
Windschutzvorrichtung für ein Kraftfahrzeug mit öffnungsfähigem Dach
Dispositif de paravent pour véhicule automobile avec toit ouvrant

(30) Priority: 20.07.2006 IT TO20060538
(43) Date of publication of application: 23.01.2008
(73) Proprietor: FIAT AUTO S.p.A., 10135 Torino (IT)
(72) Inventor: Tosco, Franco, 10135 Torino (IT); Graziano, Franco, 10135 Torino (IT); Gobetto, Enrico, 10135 Torino (IT); Monaco, Marco, 10135 Torino (IT)
(74) Representative: Jorio, Paolo

(56) References cited:
- EP-A- 1 036 685
- DE-A1- 10 221 501
- DE-A1- 10 246 753
- DE-A1-102004 048 375

## Description

This invention relates to a windbreak device for a motor vehicle with an opening roof.

In motor vehicles with an opening roof the roof comprises a panel which can move longitudinally along the roof between an open position and a closed position. In cars in particular, when the panel is moved to the open position the flow of air entering the passenger space is very inconvenient for the passengers, and may be unbearable at high speeds.

Windbreak devices which are caused to be active when the panel is opened have already been proposed in order to reduce the flow of air entering the passenger space. In a known device a fixed windbreak element, which has the disadvantage that it increases the aerodynamic resistance of the vehicle even when the panel is in the closed position, is provided in the area of the roof in front of the moving panel.

A motor vehicle with an opening roof in which the windbreak device comprises a supporting structure for a windbreak screen, which emerges from its seat when the panel is moved into the open position, is also known. In this motor vehicle the mechanism for opening the panel and that structure is complicated and bulky, as a result of which there is a restriction on the useful width of the opening in the roof and space within the passenger space.

DE10246753A1 corresponds to the preamble of claim 1 and discloses a car roof, which has a wind deflector fitted on the front edge of the roof opening. The wind deflector swivels upwards when the sun roof is opened. A sealing strip on the front of the sun roof cooperates with the upper surface of the deflector during opening.

The object of the invention is to provide a windbreak device which is highly reliable and of limited cost, overcoming the disadvantages of known windbreak devices.

According to the invention this object is achieved through a windbreak device for a motor vehicle with an opening roof as defined in claim 1.

For a better understanding of the invention a preferred embodiment provided by way of example is described with the help of the appended drawings in which:
Figure 1 is a partial longitudinal cross-section of the opening roof of the motor vehicle comprising a windbreak device according to the invention,
Figure 2 is a diagrammatical perspective view of the windbreak device in the operating position,
Figure 3 is a cross-section of the windbreak device in Figure 2 seen in the longitudinal plane of the motor vehicle,
Figure 4 is a cross-section along the line IV-IV in Figure 3, on a reduced scale and in another operating position.

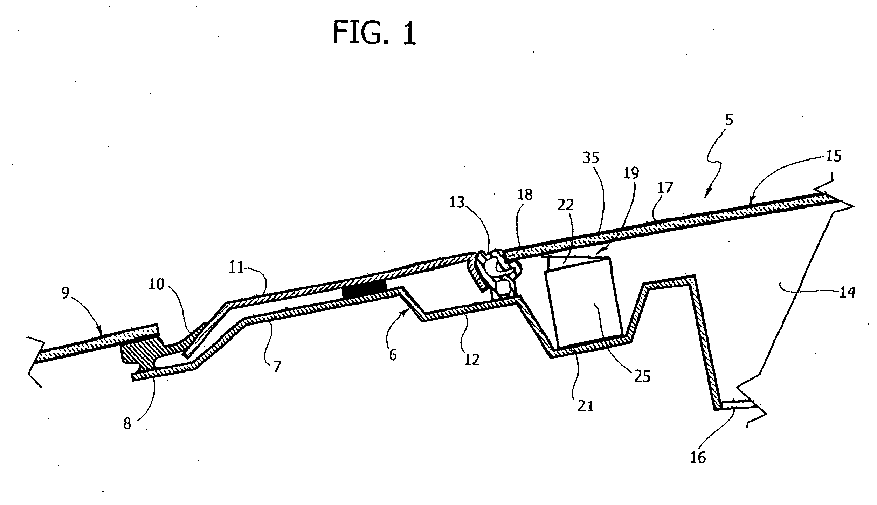

With reference to Figure 1, 5 generically indicates the opening roof of a motor vehicle, in particular a car. Roof 5 comprises a fixed frame 6 formed from a shaped sheet. Frame 6 has an anterior portion or transverse member 7 provided with an anterior edge 8 to which the normal transparent windscreen 9 of the car and an anterior edge 10 of an anterior portion of fixed roof 11, which has an opening 15 in roof 5, are attached in a known way. Transverse member 7 comprises a first lowered portion or depression 12 which is attached in a leaktight way to the posterior edge the anterior portion 10 of fixed roof 11 through a seal 13 of resilient material.

Frame 6 is attached to the loadbearing structure of the car's bodywork and in addition to anterior transverse member 7 comprises two lateral portions 14, of which only one is partly shown in Figure 1, and a posterior transverse member which is not shown in Figure 1. Finally, frame 6 has an opening 16 bounded by anterior transverse member 7, lateral portions 14 and the aforesaid posterior transverse member which is located in relation to opening 15 in fixed roof 11.

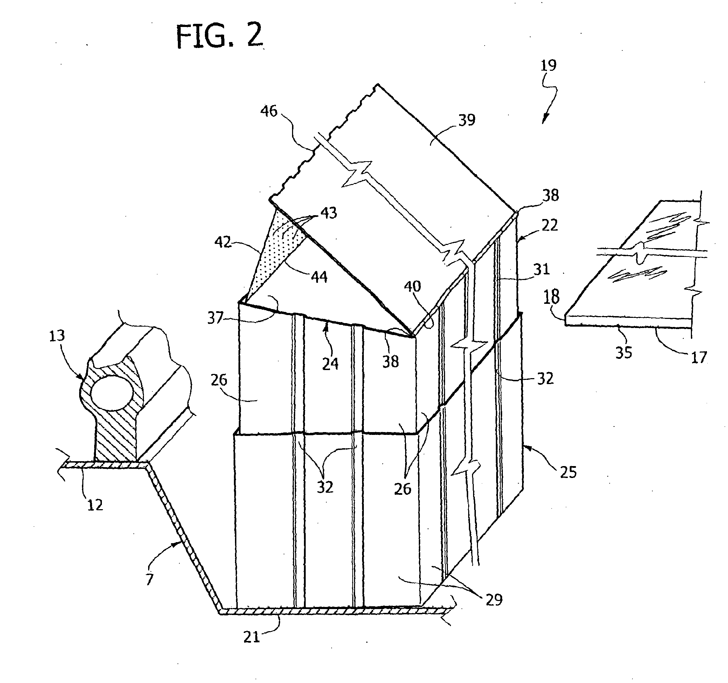

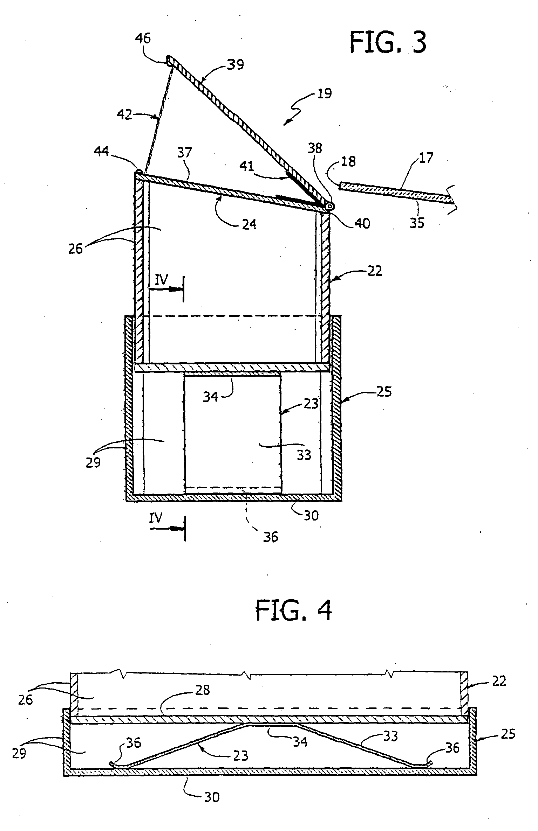

Opening 15 in fixed roof 11 is normally closed by a panel 17 of roof 5. Panel 17 can move longitudinally along roof 5 between a closed position shown in Figure 1 and an open position shown in Figures 2 and 3.

In particular, panel 17 can move on two longitudinal guides borne by lateral portions 14 of frame 6 and when it is in the position in Figure 1 an anterior edge 18 thereof engages seal 13 in such a way as to close off the car's passenger space with an airtight seal. The movement of panel 17 along the corresponding guides may be controlled manually or by a suitable electric motor.

Roof 5 is provided with a windbreak device, indicated generically by 19, which is located in a second depression 21 in transverse member 7, extending substantially over the entire width of opening 16. Windbreak device 19 comprises a rigid windbreak body 22 (Figures 2 and 3) which can move upwards, substantially in a direction perpendicular to roof 5, when panel 17 is moved into the open position.

In accordance with the invention, windbreak body 22 is pushed outwards from roof 5 by resilient means 23, and is fitted with a cam member 24 which is capable of being engaged by panel 17 in order to control resilient means 23. Body 22 is located in a corresponding seat 25 secured in depression 18, in which it can move in a direction substantially perpendicular to panel 17.

In particular, body 22 has a substantially prismatic shape, having side walls 26, and a flat end wall 28 perpendicular to side walls 26. Seat 25 is formed by a box-like enclosure having a number of lateral walls 29 capable of slidably guiding side walls 26 of body 22, and a flat end wall 30 perpendicular to lateral walls 29. Body 22 and seat 25 have a transverse dimension with respect to the direction of travel of the motor vehicle which is slightly less than that of opening 15 in fixed roof 11.

Advantageously, for optimum guidance of body 22, side walls 26 of body 22 are fitted with a set of parallel grooves 31 engaging matching ribs 32 borne by lateral walls 29 of seat 25. As an alternative grooves 31 may be located on walls 29 of seat 25, and ribs 32 on walls 26 of body 22.

Resilient means 23 comprise at least one leaf spring 33 (Figures 2 and 4) located between end wall 28 of body 22 and end wall 30 of seat 25. Preferably leaf spring 33 comprises a central portion 34 fixed beneath end wall 28 of body 22 and two rounded extremities 36 which can move in a transverse direction along end wall 30 of seat 25.

Cam member 24 of body 22 may comprise an upwardly inclined section in the direction of motion of the car, for example attached to walls 26 of body 22. Advantageously cam member 24 is formed from an upper wall 37 of body 22 which has the shape of a plane which is inclined with respect to base wall 28. Wall 37 is therefore inclined with respect to the trajectory of movement of body 22, and that of panel 17. A portion 35 of panel 17 adjacent to corresponding anterior edge 18 is capable of acting directly or indirectly together with inclined wall 37 in such a way as to permit body 22 to move outwards from seat 25, and therefore roof 5, when panel 17 moves towards the open position, and to return it inwards when panel 17 is moved towards the closed position.

According to another feature of the invention, a pivot or hinge 38 for a support for an additional windbreak member is located on upper wall 37 of body 22. The support is formed from a wall 39 which can rotate about the axis of hinge 38 and which opens like a book through the force of other resilient means. In particular, hinge 38 is located on a posterior edge 40 of upper wall 37. The other aforesaid resilient means comprise at least one helical torsion spring 41 located between upper wall 37 and rotating wall 39.

Finally the aforesaid additional windbreak member comprises a flexible screen 42 fitted with a series of microholes 43, for example of diameter less than 1 mm. Screen 42 is fixed to an anterior edge 44 of upper wall 37 of body 22 and also to an anterior edge 46 of rotating wall 39. Preferably the width of screen 42, that is the distance between edges 44 and 46, may be between 5 and 20 mm when rotating wall 39 is in the open position.

Rotating wall 39 and/or the additional windbreak member are preferably shaped so as to match the aerodynamic requirements of the car. In particular anterior edge 46 of rotating wall 39 is shaped by means of teeth to break up the flow of air originating from windscreen 9 (see also Figure 1).

Panel 17 is capable of acting on rotating wall 39 in order to control torsion spring 41 in such a way as to cause rotating wall 39 to open when panel 17 is moved into the open position and to cause it to close again when panel 17 is moved into the closed position. It is obvious that portion 35 of panel 17 adjacent to upper anterior edge 18 is capable of acting on upper wall 37 of body 22 through rotating wall 39.

Windbreak device 19 operates as follows.

When panel 17 is in the closed position in Figure 1 its anterior edge 18 engages seal 13 in an airtight manner, while portion 35 of panel 17 adjacent to edge 18 engages rotating wall 39 holding it in contact with upper wall 37 of body 22, against the force of torsion spring 41. In addition to this, portion 35 of panel 17 holds windbreak body 22 retracted within seat 25 through rotating wall 39 against the force of leaf spring 33 which is flattened as indicated in Figure 4.

When panel 17 moves along roof 5 longitudinally towards the rear of the car, before opening 16 is completely open, edge 18 of panel 17 moves on rotating wall 39 which bears against upper wall 37 and therefore that posterior part is also inclined. Leaf spring 33 then presses body 22 outwards from seat 25 together with rotating wall 39.

When body 22 reaches its upward end of travel further rearward movement of panel 17 enables torsion spring 41 to cause rotating wall 39 to rotate about hinge 38 until edge 18 leaves rotating wall 39. Windbreak device 19 then moves into the position in Figures 2 and 3 in which body 22 projects outwards from roof 5 and screen 42 is tensioned by edge 46 of rotating wall 39 through the force of torsion spring 41. Panel 17 can be immobilised in any position along roof 5 in order to open opening 15 partly or wholly, in a known way.

When panel 17 is moved forwards towards the closed position in Figure 1 edge 18 first engages rotating wall 39 causing it to close onto upper wall 37 against the force of torsion spring 41 until rotating wall 39 comes into contact with upper wall 37 of body 22. As panel 17 continues to move forward, rotating wall 39 and upper wall 37 act as an inclined plane. After having passed over rotating wall 39 edge 18 of panel 17 overcomes the force of leaf spring 23 and returns body 22 towards the interior of seat 25. When panel 17 reaches the closed position in Figure 1 edge 18 engages seal 13 and windbreak device 19 is held at rest by portion 35 of panel 17.

The advantages of windbreak device 19 according to the invention in comparison with the known art are obvious from what can be seen above. In particular, device 19 has a very simple mechanism of movement comprising resilient means 23 and 41 controlled by cam means 24 by means of the movement of moving panel 17 of roof 5 itself. Furthermore, through the use of rotating wall 39 and screen 42 an extensive overall windbreak surface is obtained with minimum dimensions. Finally, by shaping edge 46 of rotating wall 39 the windbreak may be adjusted to the aerodynamic requirements of the car, for example breaking up the flow of air caused by windscreen 9.

It is to be understood that various modifications and improvements may be made to the windbreak device described without going beyond the scope of the claims. For example, panel 17 may act on cam means 24 through a member which is not anterior edge 18, preferably a rolling element. In addition to this cam means 24 may be restricted to a reduced portion of the width of windbreak body 22 and have a profile other than the straight profile described above.

In moving perpendicular to roof 5 body 22 may also be guided by arms hinged on seat 25. Hinge 38 may in turn be located in any position on upper wall 37 of body 22. Finally, leaf spring 33 and/or torsion spring 41 may be replaced by one or more springs of a different type. For example, leaf spring 33 may be replaced by two torsion springs located between end wall 30 of seat 25 and end wall 28 of body 22.

## Claims

1. Windbreak device for a motor vehicle with an opening roof (5) in which a panel (17) can move longitudinally along the roof (5) between a closed position and an open position; the windbreak device comprising:
- a rigid windbreak body (22) capable of moving substantially in a direction perpendicular to the roof (5) and fitted with a cam member (24);
- means (23, 24) for moving the said body (22) and comprising resilient means (23) to thrust outwards said body (22);
the said panel (17) being capable of acting together with the said cam member (24) to control the said resilient means (23) in such a way as to allow the said body (22) to move outwards when the said panel (17) moves towards the said open position and to return the said body (22) towards the interior of the passenger space when the said panel (17) returns to the said closed position; the said cam member (24) having a profile which is inclined upwards in the direction of travel of the motor vehicle;
**characterised in that** the said body (22) has a substantially prismatic shape with side walls (26) which can move in a corresponding seat (25) attached to the said roof (5); said seat (25) being formed by a box like enclosure having a number of lateral walls (29) capable of slidably guiding the side walls (26) of said body (22) along said direction.

2. Device according to claim 1, **characterised in that** the said cam member (24) is formed from an upper wall (37) of the said body (22) having the shape of an inclined plane.

3. Device according to claim 1 or 2, **characterised in that** the said seat (25) is capable of receiving the said body (22), guide means (31, 32) being provided between the said seat (25) and the said side walls (26).

4. Device according to claim 3, **characterised in that** the said guide means (31, 32) comprise parallel grooves (31) engaging ribs (32) matching them, the said grooves (31) and the said ribs (32) being located one in the said seat (25) and the others in the said side walls (26).

5. Device according to any one of the preceding claims, **characterised in that** the said resilient means (23) comprise at least a leaf spring (33) acting on an end wall (28) of the said body (22).

6. Device according to claims 4 and 5, **characterised in that** the said leaf spring (33) has a central portion (34) attached to the said end wall (28) and two rounded extremities (36) which can move on an end wall (30) of the said seat (25).

7. Device according to claim 2 and any one of claims 3 to 6, **characterised in that** the said panel (17) can move on two parallel guides located on a fixed frame (6) of the said roof (5) and can be moved manually between the said open and closed positions, the said body (22) having a width corresponding to that of the said panel (17).

8. Device according to claim 7, **characterised in that** the said seat (25) is attached to a re-entrant (21) in the said frame (6), the said panel (17) being capable of engaging a seal (13) of resilient material attached to the said frame (6) anteriorly with respect to the said re-entrant (21).

9. Device according to claim 7 or 8, **characterised in that** a pivot (38) for a support (39) which is capable of opening like a book through the force of other resilient means (41) located between the said upper wall (37) and the said support (39) is located on the upper wall (37) of the said body (22).

10. Device according to claim 9, **characterised in that** an additional windbreak member (42) is located between the said support (39) and the said upper wall (37).

11. Device according to claim 10, **characterised in that** the said support is formed from a rotating wall (39), the said pivot (38) being located on a posterior edge (40) of the said upper wall (37), the said other resilient means being formed from at least one helical torsion spring (41) located between the said rotating wall (39) and the said upper wall (37).

12. Device according to claim 11, **characterised in that** the said panel (17) is also capable of acting on the said rotating wall (39) to control the said torsion spring (41).

13. Device according to claim 12, **characterised in that** the said panel (17) acts on the said upper wall (37) through the said rotating wall (39).

14. Device according to any one of claims 10 to 13, **characterised in that** the said additional windbreak member comprises a flexible screen (42) provided with a series of microholes (43) and attached to an anterior edge (44) of the said upper wall (37) and also to an anterior edge (46) of the said rotating wall (39).

15. Device according to any one of claims 10 to 14, **characterised in that** the said additional windbreak member (42) is shaped to match the aerodynamic requirements of the motor vehicle.

16. Device according to claims 14 and 15, **characterised in that** at least the anterior edge (46) of the said rotating wall (39) is shaped with teeth in order to break up the flow of air carried over the said flexible screen (42).

## Patentansprüche

1. Windschutzvorrichtung für ein Kraftfahrzeug mit einem Schiebedach (5), in dem sich ein Panel (17) längs entlang des Dachs (5) zwischen einer geschlossenen Position und einer offenen Position bewegen kann, wobei die Windschutzvorrichtung umfasst:
- einen festen Windschutzkörper (22), der sich im Wesentlichen in einer senkrecht zum Dach (5) befindlichen Richtung bewegen kann und mit einem Hubbauteil (24) ausgerüstet ist,
- ein Mittel (23, 24) zum Bewegen des Körpers (22), das ein Federmittel (23) umfasst, um den Körper (22) nach außen zu schieben,
wobei das Panel (17) zusammen mit dem Hubbauteil (24) wirken kann, um das Federmittel (23) derart zu steuern, damit sich der Körper (22) nach außen bewegen kann, wenn sich das Panel (17) in Richtung der offenen Position bewegt, und den Körper (22) in Richtung des Inneren des Fahrgastraumes rückführen kann, wenn das Panel (17) in die geschlossene Position zurückkehrt, wobei das Hubbauteil (24) ein Profil aufweist, das in der Fahrtrichtung des Kraftfahrzeugs nach oben geneigt ist;
**dadurch gekennzeichnet dass**
der Körper (22) eine im Wesentlichen prismatische Gestalt mit Seitenwänden (26) aufweist, die sich in einem an dem Dach (5) angebrachten, entsprechenden Sitz (25) bewegen können, wobei der Sitz (25) durch ein schachtelähnliches Gehäuse mit einer Anzahl von Nebenwänden (29) ausgebildet ist, welche die Seitenwände (26) des Körpers (22) entlang der Richtung gleitbar führen können.

2. Vorrichtung gemäß Anspruch 1, **dadurch gekennzeichnet, dass** das Hubbauteil (24) aus einer die Gestalt einer geneigten Ebene aufweisenden oberen Wand (37) des Körpers (22) ausgebildet ist.

3. Vorrichtung gemäß Anspruch 1 oder 2, **dadurch gekennzeichnet, dass** der Sitz (25) den Körper (22) empfangen kann, wobei Führungsmittel (31, 32) zwischen dem Sitz (25) und den Seitenwänden (26) vorgesehen sind.

4. Vorrichtung gemäß Anspruch 3, **dadurch gekennzeichnet, dass** die Führungsmittel (31, 32) parallele Nuten (31) umfassen, in die zu ihnen passende Rippen (32) eingreifen, wobei von den Nuten (31) und den Rippen (32) einen im Sitz (25) und die anderen in den Seitenwänden (26) gelegen sind.

5. Vorrichtung gemäß einem der vorangegangenen Ansprüche, **dadurch gekennzeichnet, dass** das Federmittel (23) zumindest eine Blattfeder (33) umfasst, die auf eine Endwand (28) des Körpers (22) wirkt.

6. Vorrichtung gemäß den Ansprüchen 4 und 5, **dadurch gekennzeichnet, dass** die Blattfeder (33) einen an der Endwand (28) angebrachten mittigen Abschnitt (34) und zwei gerundeten Extremitäten (36), die sich an einer Endwand (30) des Sitzes (25) bewegen können, aufweist.

7. Vorrichtung gemäß Anspruch 2 und einem der Ansprüche 3 bis 6, **dadurch gekennzeichnet, dass** sich das Panel (17) an zwei an einem fixierten Rahmen (6) des Dachs (5) gelegenen parallelen Führungen bewegen kann, und zwischen der offenen und der geschlossenen Position manuell bewegt werden kann, wobei der Körper (22) eine der des Panels (17) entsprechenden Breite aufweist.

8. Vorrichtung gemäß Anspruch 7, **dadurch gekennzeichnet, dass** der Sitz (25) an einer Vertiefung (21) im Rahmen (6) angebracht ist, wobei das Panel (17) an einer Dichtung (13) eines am Rahmen (6) bezüglich der Vertiefung (21) vorher angebrachten Federmaterial angreifen kann.

9. Vorrichtung gemäß Anspruch 7 oder 8, **dadurch gekennzeichnet, dass** ein Gelenk (38) für eine Stütze (39), die sich durch die Kraft eines anderen zwischen der oberen Wand (37) und der Stütze (39) gelegenen Federmittels (41) wie ein Buch öffnen kann, an der oberen Wand (37) des Körpers (22) gelegen ist.

10. Vorrichtung gemäß Anspruch 9, **dadurch gekennzeichnet, dass** ein zusätzliches Windschutzbauteil (42) zwischen der Stütze (39) und der oberen Wand (37) gelegen ist.

11. Vorrichtung gemäß Anspruch 10, **dadurch gekennzeichnet, dass** die Stütze aus einer drehenden Wand (39) ausgebildet ist, wobei das Gelenk (38) an der hinteren Kante (40) der oberen Wand (37) gelegen ist, wobei das andere Federmittel aus zumindest einer zwischen der drehenden Wand (39) und der oberen Wand (37) gelegenen, spiralförmigen Torsionsfeder (41) ausgebildet ist.

12. Vorrichtung gemäß Anspruch 11, **dadurch gekennzeichnet, dass** das Panel (17) ebenso auf die drehende Wand (39) wirken kann, um die Torsionsfeder (41) zu steuern.

13. Vorrichtung gemäß Anspruch 12, **dadurch gekennzeichnet, dass** das Panel (17) durch die drehende Wand (39) auf die oberen Wand (37) wirkt.

14. Vorrichtung gemäß einem der Ansprüche 10 bis 13, **dadurch gekennzeichnet, dass** das zusätzliche Windschutzbauteil einen flexiblen Schirm (42) umfasst, der mit einer Reihe von Mikrolöchern (43) versehen ist und an einer vorderen Kante (44) der oberen Wand (37) und ebenso an einer vorderen Kante (46) der drehenden Wand (39) angebracht ist.

15. Vorrichtung gemäß einem der Ansprüche 10 bis 14, **dadurch gekennzeichnet, dass** das zusätzliche Windschutzbauteil (42) so gestaltet ist, damit es den aerodynamischen Anforderungen des Kraftfahrzeugs entspricht.

16. Vorrichtung gemäß den Ansprüchen 14 und 15, **dadurch gekennzeichnet, dass** zumindest die vordere Kante (46) der drehenden Wand (39) mit Zähnen ausgestaltet ist, um den über den flexiblen Schirm (42) getragenen Luftstrom aufzubrechen.

## Revendications

1. Dispositif pare-vent pour véhicule automobile ayant un toit ouvrant (5), dans lequel un panneau (17) peut se déplacer longitudinalement le long du toit (5) entre une position fermée et une position ouverte, le dispositif pare-vent comprenant :
- un corps de pare-vent rigide (22) capable de se déplacer essentiellement dans une direction perpendiculaire au toit (5) et pourvu d'un élément à came (24) ;
- des moyens (23, 24) pour déplacer ledit corps (22) et comprenant des moyens élastiques (23) pour pousser ledit corps (22) vers l'extérieur ;
ledit panneau (17) étant capable d'interagir avec ledit élément à came (24) pour commander lesdits moyens élastiques (23) de façon à permettre audit corps (22) de se déplacer vers l'extérieur lorsque ledit panneau (17) se déplace vers ladite position ouverte et à ramener ledit corps (22) vers l'intérieur de l'espace passager lorsque ledit panneau (17) revient dans ladite position fermée ; ledit élément à came (24) ayant un profil qui est incliné vers le haut dans le sens du déplacement du véhicule automobile ;
**caractérisé en ce que** ledit corps (22) a une forme essentiellement prismatique avec des parois latérales (26) qui peuvent se déplacer dans un siège correspondant (25) solidaire dudit toit (5) ; ledit siège (25) étant formé par une enceinte de type boîte ayant plusieurs parois latérales (29) capables de guider les parois latérales (26) dudit corps (22) par coulissement le long de ladite direction.

2. Dispositif selon la revendication 1, **caractérisé en ce que** ledit élément à came (24) est formé à partir d'une paroi supérieure (37) dudit corps (22) ayant la forme d'un plan incliné.

3. Dispositif selon la revendication 1 ou 2, **caractérisé en ce que** ledit siège (25) est capable de recevoir ledit corps (22), des moyens de guidage (31, 32) étant prévus entre ledit siège (25) et lesdites parois latérales (26).

4. Dispositif selon la revendication 3, **caractérisé en ce que** lesdits moyens de guidage (31, 32) comprennent des rainures parallèles (31) recevant des nervures (32) qui leur sont complémentaires, lesdites rainures (31) et lesdites nervures (32) étant situées les unes dans ledit siège (25) et les autres dans lesdites parois latérales (26).

5. Dispositif selon l'une quelconque des revendications précédentes, **caractérisé en ce que** lesdits moyens élastiques (23) comprennent au moins un ressort à lames (33) agissant sur une paroi d'extrémité (28) dudit corps (22).

6. Dispositif selon les revendications 4 et 5, **caractérisé en ce que** ledit ressort à lames (33) a une partie centrale (34) fixée à ladite paroi d'extrémité (28) et deux extrémités arrondies (36) qui peuvent se déplacer sur une paroi d'extrémité (30) dudit siège (25).

7. Dispositif selon la revendication 2 et l'une quelconque des revendications 3 à 6, **caractérisé en ce que** ledit panneau (17) peut se déplacer sur deux guides parallèles situés sur un cadre fixe (6) dudit toit et peut être déplacé manuellement entre lesdites positions ouverte et fermée, ledit corps (22) ayant une largeur qui correspond à celle dudit panneau (17).

8. Dispositif selon la revendication 7, **caractérisé en ce que** ledit siège (25) est fixé à un renfoncement (21) formé dans ledit cadre (6), ledit panneau (17) étant capable d'entrer en prise avec un joint (13) en matériau élastique fixé audit cadre (6) au niveau d'une position située plus à l'avant que ledit renfoncement (21).

9. Dispositif selon la revendication 7 ou 8, **caractérisé en ce qu'**un pivot (38) pour support (39), qui est capable de s'ouvrir à la manière d'un livre sous l'action d'autres moyens élastiques (41) situés entre ladite paroi supérieure (37) et ledit support (39), est situé sur la paroi supérieure (37) dudit corps (22).

10. Dispositif selon la revendication 9, **caractérisé en ce qu'**un élément pare-vent additionnel (42) est situé entre ledit support (39) et ladite paroi supérieure (37).

11. Dispositif selon la revendication 10, **caractérisé en ce que** ledit support est formé à partir d'une paroi rotative (39), ledit pivot (38) étant situé sur un bord arrière (40) de ladite paroi supérieure (37), lesdits autres moyens élastiques étant formés par au moins un ressort de torsion hélicoïdal (41) situé entre ladite paroi rotative (39) et ladite paroi supérieure (37).

12. Dispositif selon la revendication 11, **caractérisé en ce que** ledit panneau (17) est également capable d'agir sur ladite paroi rotative (39) pour commander ledit ressort de torsion (41).

13. Dispositif selon la revendication 12, **caractérisé en ce que** ledit panneau (17) agit sur ladite paroi supérieure (37) par l'intermédiaire de ladite paroi rotative (39).

14. Dispositif selon l'une quelconque des revendications 10 à 13, **caractérisé en ce que** ledit élément pare-vent additionnel comprend un écran souple (42) pourvu d'une série de micro-trous (43) et fixé à un bord avant (44) de ladite paroi supérieure (37) et également à un bord avant (46) de ladite paroi rotative (39).

15. Dispositif selon l'une quelconque des revendications 10 à 14, **caractérisé en ce que** ledit élément pare-vent additionnel (42) a une forme propre à satisfaire aux exigences aérodynamiques du véhicule automobile.

16. Dispositif selon les revendications 14 et 15, **caractérisé en ce qu'**au moins le bord avant (46) de ladite paroi rotative (39) est pourvu de dents afin de casser le flux d'air transporté sur ledit écran souple (42).
